# EUROPÄISCHE PATENTSCHRIFT

(11) **EP 3 311 958 B1**
(45) Veröffentlichungstag und Bekanntmachung des Hinweises auf die Patenterteilung: **07.12.2022**
(21) Anmeldenummer: 17195834.1
(22) Anmeldetag: 11.10.2017
(51) Int. Cl.: B25F 5/00, B25B 23/147, B25B 21/00, H02P 6/28

(54) **VERFAHREN ZUM REGELN EINER DREHZAHL EINES ELEKTROMOTORS EINES ELEKTROWERKZEUGES**
METHOD FOR REGULATING A ROTATIONAL SPEED OF AN ELECTRIC MOTOR OF AN ELECTRIC TOOL
PROCÉDÉ DE RÉGLAGE DE LA VITESSE DE ROTATION D'UN MOTEUR ÉLECTRIQUE D'UN OUTIL ÉLECTRIQUE

(30) Priorität: 21.10.2016 DE 102016220716
(43) Veröffentlichungstag der Anmeldung: 25.04.2018
(73) Patentinhaber: Robert Bosch GmbH, 70442 Stuttgart (DE)
(72) Erfinder: Koniakowsky, Joerg, 73760 Ostfildern (DE); Mock, Stefan, 73630 Remshalden (DE)

(56) Entgegenhaltungen:
- EP-A1- 2 716 407
- WO-A1-2011/004902
- DE-A1-102011 007 648
- DE-U1-202013 100 915

## Beschreibung

Die Erfindung betrifft ein Verfahren zum Regeln einer Drehzahl eines Elektromotors eines Elektrowerkzeuges gemäß Patentanspruch 1, ein Steuergerät gemäß Patentanspruch 15 und ein Elektrowerkzeug gemäß Patentanspruch 21.

### Stand der Technik

Im Stand der Technik ist es bekannt, die Leistung eines elektrischen Motors eines Elektrowerkzeuges abhängig von einer Betätigung eines Steuermittels des Elektrowerkzeuges einzustellen. Dabei nimmt die Drehzahl mit steigendem Lastmoment ab.

Aus der DE 10 2011 007 648 A1 ist eine Handwerkzeugmaschine nach dem Oberbegriff von Anspruch 1 mit einem Getriebe bekannt, das eine halbautomatische Getriebeumschaltvorrichtung zum Umschalten zwischen einem ersten Gang und einem zweiten Gang aufweist.

Die EP 2 716 407 A1 beschreibt eine Werkzeugmaschine mit einem einstellbaren Getriebe, mit einer Zustandserkennungsvorrichtung und mit einer Bedienkontrollvorrichtung.

In der WO 2011/004902 A1 wird eine Werkzeugmaschine mit einem Motor, einem Steuerkreis, einem Kontrollteil und einem Spannungserkennungskreis offenbart.

### Offenbarung der Erfindung

Die Aufgabe der Erfindung besteht darin, ein verbessertes Verfahren zum Regeln der Drehzahl eines Elektromotors eines Elektrowerkzeuges, ein verbessertes Steuergerät und ein verbessertes Elektrowerkzeug bereitzustellen.

Die Aufgaben der Erfindung werden durch die unabhängigen Patentansprüche gelöst. Weitere Ausführungsformen der Erfindung sind in den abhängigen Ansprüchen angegeben.

Es wird ein Verfahren zum Regeln einer Drehzahl eines Elektromotors eines Elektrowerkzeuges vorgeschlagen, wobei abhängig von einer Betätigung eines Steuermittels durch eine Bedienperson die Drehzahl des Elektromotors festgelegt wird. Das Steuermittel wird in der Weise betätigt wird, dass eine Drehzahl angefordert wird, die kleiner als eine maximale Drehzahl ist. Somit wird nicht eine maximale Leistung des Elektromotors angefordert, sondern es sind noch Leistungsreserven vorhanden, Die Drehzahl wird in der Weise eingestellt, dass in einem ersten Drehzahlbereich mit Zunahme eines vom Elektromotor abgegebenen Drehmomentes die Drehzahl mit einer ersten Steigung abnimmt. Zudem wird die Drehzahl in einem zweiten Drehzahlbereich in der Weise eingestellt, dass die Drehzahl mit Zunahme des abgegebenen Drehmomentes mit einer zweiten Steigung abnimmt, wobei die zweite Steigung mathematisch gesehen größer als die erste Steigung ist. Somit ist es möglich, insbesondere bei hohen Drehmomenten und kleinen Drehzahlen eine an das hohe Drehmoment angepasste Drehzahl bereitzustellen.

Dieses Verfahren kann beispielsweise beim Eindrehen einer Schraube in ein Werkstück verwendet werden. Bei einer in dem Werkstück fast versenkten Schraube wird beim weiteren Eindrehen der Schraube die Schraube mit einer reduzierten Drehzahl weiter eingeschraubt und im Werkstück versenkt. Durch die reduzierte Drehzahl bei gleichzeitig maximal möglichem Moment wird der Arbeitsvorgang langsamer durchgeführt und der Bedienperson bleibt genug Reaktionszeit, um nach Erreichen des gewünschten Ergebnisses selbst abzuschalten. Dies kann z.B. die exakte Einschraubtiefe einer Schraube in einem Holz oder das Erreichen eines, durch die Bedienperson wahrgenommenen Anzugsmomentes sein.

Zudem können mit dem beschriebenen Verfahren Probleme beim Einschrauben, die z.B. durch Schwankungen der Lastmomente erzeugt werden, ausgeglichen werden. Die Lastmomente können beispielsweise durch unterschiedliche Materialeigenschaften des Werkstückes erzeugt werden.

Zudem kann das Verfahren beim Ausdrehen einer Schraube, insbesondere beim Lösen einer Schraube aus einem Werkstück verwendet werden. Mithilfe des beschriebenen Verfahrens wird das Drehmoment langsamer als im Stand der Technik erhöht und die Bedienperson hat die Möglichkeit, die Drehzahl und das Drehmoment durch eine Veränderung der Betätigung des Steuermittels zu reduzieren. Dadurch kann eine Beschädigung der Schraube vermieden werden.

Ein Merkmal der Erfindung ist, dass die Solldrehzahl des Elektrowerkzeuges über das Steuermittel durch eine Bedienperson in gewohnter Weise einstellbar ist. So kann im Falle des Leerlaufes (Abgabemoment = 0Nm), eine beliebige Drehzahl zwischen 0 U/min und einer maximal möglichen Drehzahl gewählt werden. Bei hohen Drehzahlen bricht die Drehzahl in gewohnter Weise aufgrund des Lastmomentes ein, wodurch der Bediener insbesondere bei hohen Drehzahlen und kleinen Momenten (z.B. Akkuschrauber im schnellsten Gangwahl) über den hörbaren Drehzahleinbruch eine Rückmeldung zum aktuellen Moment bekommt.

In einer Ausführung wird, wenn die Drehzahl unter eine Schwelldrehzahl fällt, die Drehzahl auf einem niedrigen Niveau durch den Regler konstant gehalten. Somit wird es dem Bediener ermöglicht, beim gewünschten Moment oder einer gewünschten Einschraubtiefe gezielt abzuschalten.

Bei einer durch den Bediener über das Steuerelement eingestellten Drehzahlen kleiner der Schwelldrehzahl wird ein Drehzahl-Regler aktiviert. Hierdurch ist es möglich, auch bei einer minimalen Drehzahl eine Schraube um wenige Grad weiterzudrehen, auch wenn diese Schraube schon fast versenkt wurde.

In einer Ausführung nimmt in dem ersten Drehzahlbereich bei einer Abnahme des abgegebenen Drehmomentes die Drehzahl mit der ersten Steigung zu und die Drehzahl verläuft in dem zweiten Drehzahlbereich bei einer Abnahme des abgegebenen Drehmomentes mit der zweiten Steigung.

In einer Ausführung wird die Drehzahl im zweiten Drehzahlbereich annähernd konstant gehalten, so dass die zweite Steigung einen Wert Null aufweist. Dadurch kann eine weitere Verbesserung des Einschraubvorganges erreicht werden.

In einer Ausführung ist ein dritter Drehzahlbereich vorgesehen, wobei in dem dritten Drehzahlbereich die Drehzahl in der Weise eingestellt wird, dass mit Zunahme des abgegebenen Drehmomentes die Drehzahl mit einer dritten Steigung abfällt, wobei die dritte Steigung einen anderen Wert als die zweite Steigung aufweist. Somit kann das Einschraubverhalten an verschiedene Drehzahlbereiche individueller angepasst werden.

In einer Ausführung ist ein vierter Drehzahlbereich vorgesehen, wobei in dem vierten Drehzahlbereich die Drehzahl des Elektromotors in der Weise eingestellt wird, dass die Änderung der Drehzahl mit Zunahme des abgegebenen Drehmomentes kleiner ist als in dem zweiten Drehzahlbereich.

In einer Ausführung hängt die Änderung der Drehzahl mit der Zunahme des Drehmomentes von einem Betriebsparameter des Elektrowerkzeuges ab. Dadurch kann eine genauere Anpassung der Drehzahl an die Betriebssituation erreicht werden. Insbesondere bei Bohrschraubern, die eine mechanische Übersetzung aufweisen, bei welcher die Übersetzung durch die Bedienperson einfach zu verändern ist, kann das Verfahren an die unterschiedlichen Abtriebsdrehzahlen an der Schraube angepasst werden und somit an die optimale Bedingung angepasst werden. Dies ist insbesondere bei einem Elektrowerkzeug von Vorteil, das eine mechanische Übersetzung aufweist, welche das Motordrehmoment gleichmäßig an die Abtriebsspindel überträgt.

In einer Ausführung ist eine Schwelldrehzahl vorgesehen, wobei die Schwelldrehzahl zwei Drehzahlbereiche, insbesondere den ersten und den zweiten Drehzahlbereich voneinander abgrenzt. Mithilfe der Schwelldrehzahl kann eine genaue Abgrenzung zwischen den Drehzahlbereichen und den unterschiedlichen Steigungen der Drehzahlen mit abnehmendem Drehmoment, d.h. Lastmoment vorgenommen werden.

In einer Ausführung hängt die Schwelldrehzahl von einem Betriebsparameter des Elektrowerkzeuges ab. Dadurch wird eine präzisere Abstimmung der Steigungen der Drehzahl erreicht.

In einer Ausführung stellt der Betriebsparameter eine Übersetzung eines Getriebes des Elektrowerkzeuges dar.

In einer Ausführung stellt der Betriebsparameter eine Betätigung des Steuermittels des Elektrowerkzeuges dar.

In einer Ausführung stellt der Betriebsparameter eine Spannung einer Stromversorgung des Elektromotors, insbesondere eine Spannung einer Batterie dar.

In einer Ausführung stellt der Betriebsparameter eine Temperatur des Elektrowerkzeuges, insbesondere eine Temperatur der Batterie, der Elektronik und/oder des Elektromotors dar.

In einer Ausführung kann die Schwelldrehzahl oder das Verhalten zwischen der Drehzahl und dem abgegebenen Drehmoment über eine Betätigung eines Bedienelementes am Elektrowerkzeug verändert werden. Das Bedienelement kann z.B. als Taster oder Stellrad ausgebildet sein.

In einer Ausführung kann die Schwelldrehzahl oder das Verhalten zwischen der Drehzahl und dem abgegebenen Drehmoment über eine Kommunikationsschnittstelle verändert werden. In einer Ausführung kann die Schwelldrehzahl oder das Verhalten zwischen Drehzahl und abgegebenem Drehmoment über ein elektronisches Gerät eingestellt werden, das über ein Kabel oder eine kabellose Verbindung mit dem Elektrowerkzeug kommuniziert.

Zudem wird ein Steuergerät vorgeschlagen, das ausgebildet ist, einen Elektromotor eines Elektrowerkzeuges gemäß einem der vorhergehenden Ansprüche zu regeln.

In einer Ausführung weist das Steuergerät, einen Drehzahlregler, einen Sollstrombegrenzer und einen Stromregler auf.

In einer Ausführung weist das Steuergerät eine Signalaufbereitung auf, wobei die Signalaufbereitung eine an den Elektromotor abgegebene Stromstärke erfasst. Zudem erfasst die Signalaufbereitung ein Signal für eine Festlegung einer Drehzahl des Elektromotors. Weiterhin gibt die Signalaufbereitung den Wert des Ausgangsstromes der Leistungselektronik an den Stromregler weiter. Die Signalaufbereitung ermittelt einen Wert für die Drehzahl des Elektromotors. Dazu kann ein Drehzahlmesser vorgesehen sein oder die Drehzahl wird aufgrund von wenigstens einem gemessenen Parameter wie z.B. dem Strom des Elektromotors abgeschätzt. Die Signalaufbereitung gibt den Wert für die Drehzahl an den Drehzahlregler und an den Sollstrombegrenzer weiter, wobei abhängig von der Betätigung eines Steuermittels eine Solldrehzahl von der Signalaufbereitung ermittelt wird und die Solldrehzahl an den Drehzahlregler weitergegeben wird. Der Drehzahlregler ermittelt abhängig von einem Vergleich aus der ermittelten Drehzahl und der Solldrehzahl einen Sollstrom. Der Sollstrom wird über eine fünfte Steuerleitung an den Sollstrombegrenzer weitergegeben. Der Sollstrombegrenzer ermittelt abhängig von der ermittelten Drehzahl und abhängig von dem gemessenen Strom einen Wert für den Sollstrom und gibt den Wert für den Sollstrom an den Stromregler weiter.

In einer weiteren Ausführung erfasst die Signalaufbereitung eine Spannung der Strom/Spannungsquelle und gibt den Wert der erfassten Spannung an den Stromregler und an den Sollstrombegrenzer weiter. Der Sollstrombegrenzer ermittelt abhängig von der ermittelten Drehzahl, abhängig von der gemessenen Spannung und abhängig von dem gemessenen Strom einen Wert für den Sollstrom.

In einer Ausführung greift der Sollstrombegrenzer auf Daten eines Datenspeichers zu und berücksichtigt die vorgegebenen Drehzahlbereiche, in denen ein vorgegebenes Verhalten der Drehzahl abhängig vom Drehmoment, insbesondere eine vorgegebene Steigung der Drehzahl mit Zunahme oder Abnahme des Drehmomentes vorgegeben ist.

In einer Ausführung weist das Elektrowerkzeug ein Getriebe auf, welches ohne weitere Hilfsmittel vom Bediener die Übersetzung verändern kann.

In einer Ausführung ist das Elektrowerkzeug als Schrauber ohne Schlagwerk ausgebildet.

In einer Ausführung weist das Elektrowerkzeug eine Drehmomentkupplung aufweist, wobei sich das Elektrowerkzeug bei Durchführung des vorgeschlagenen Verfahrens in einer Bohrstellung ohne Nutzung der Drehmomentkupplung befindet.

Die Erfindung wird im Folgenden anhand der Figuren näher erläutert. Es zeigen
- Fig. 1: einen schematischen Aufbau eines Elektrowerkzeuges,
- Fig. 2: ein Diagramm mit einem Verlauf der Drehzahl in Abhängigkeit von dem abgegebenen Drehmoment,
- Fig. 3: ein elektrisches Ersatzschaltbild des Elektrowerkzeuges,
- Fig. 4: eine weitere Drehzahl/Drehmomentkennlinie,
- Fig. 5: ein Diagramm mit weiteren Drehzahl/Drehmomentkennlinien,
- Fig. 6: ein weiteres Diagramm mit möglichen Drehzahl/Drehmomentkennlinien und
- Fig. 7: ein weiteres Diagramm mit einer Drehzahl/Drehmomentkennlinie.

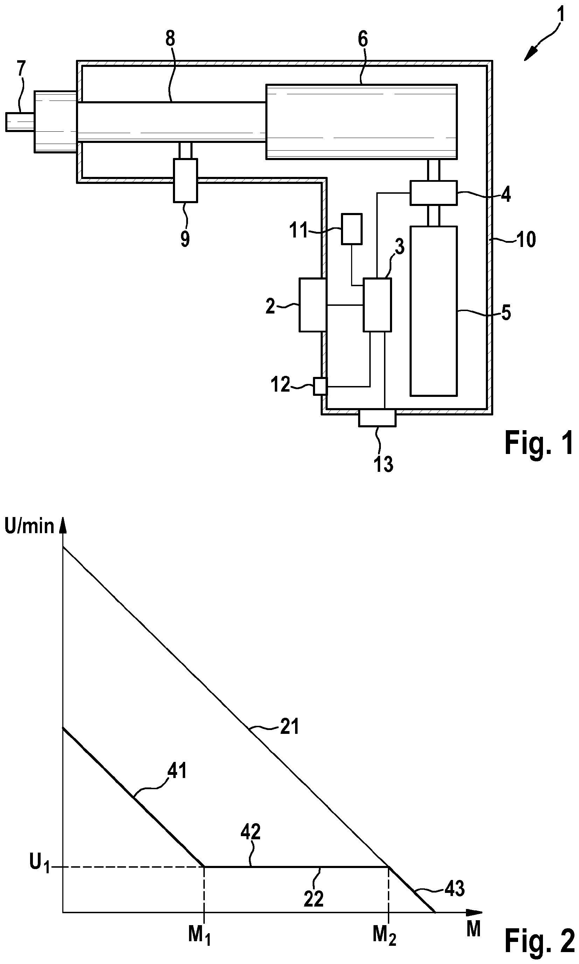

Fig. 1 zeigt in einer schematischen Darstellung ein Elektrowerkzeug 1, das ein Gehäuse 10 mit einem Steuermittel 2 zur Betätigung durch eine Bedienperson aufweist. Das Steuermittel 2 ist beispielsweise in Form eines Tasters ausgebildet, dessen Betätigungstiefe beispielsweise mithilfe eines Potentiometers erfasst wird und an ein Steuergerät 3 weitergegeben wird. Das Steuergerät 3 steht mit einer Leistungselektronik 4 in Verbindung, die die Strom- und/oder Spannungsversorgung zwischen einer Strom/Spannungsquelle 5 und dem Elektromotor 6 steuert. Der Elektromotor 6 steht mit einem Antrieb 7 in Wirkverbindung und gibt abhängig von der zugeführten elektrischen Leistung ein Drehmoment mit einer entsprechenden Drehzahl des Antriebes 7 ab.

Im Antrieb 7 kann ein Bohrer oder ein Schraubeinsatz montiert sein. Zudem kann zwischen dem Elektromotor 6 und dem Antrieb 7 ein Getriebe 8 mit einer einstellbaren Übersetzung vorgesehen sein. Weiterhin kann ein Wählschalter 9 vorgesehen sein, der die Übersetzung des Getriebes 8 festlegt. Der Wählschalter 9 kann von einer Bedienperson betätigt werden und eine gewünschte Übersetzung des Getriebes 8 festlegen. Zudem ist das Steuergerät 3 ausgebildet und mit Sensoren verbunden, um Betriebsparameter des Elektrowerkzeuges wie zum Beispiel eine Drehzahl des Elektromotors 6, ein vom Elektromotor 6 abgegebenes Drehmoment, eine Spannung der Strom/Spannungsquelle 5, eine Übersetzung des Getriebes 6 oder eine Art der Betätigung des Steuermittels wie z.B. eine Eindrücktiefe zu erfassen.

Das Steuergerät 3 ist zudem mit einem Datenspeicher 11 verbunden. Das Steuergerät 3 ist ausgebildet, um abhängig von der Art der Betätigung des Steuermittels 2 die Drehzahl des Elektromotors 6 einzustellen bzw. zu regeln. Dazu sind im Datenspeicher 11 Kennlinien, Diagramme oder Formeln abgelegt, die abhängig von der Art der Betätigung des Steuermittels 2 einen festgelegten Wert für die Drehzahl des Elektromotors festlegen, der dann mithilfe eines Regelverfahrens vom Steuergerät 3 eingestellt wird. Bei einem Steuermittel 2 in Form eines Tasters wird z.B. proportional zur Eindrücktiefe der Wert für die Drehzahl des Elektromotors erhöht. Das Steuergerät 3 ist zudem mit einem Datenspeicher 11 verbunden, in dem Steuerprogramme und/oder Kennlinien und/oder Grenzwerte und/oder vorgegebene Drehzahlbereiche und/oder vorgegebene Drehmomentbereiche für Werte von Drehahlen bzw. für Steigungen von Drehzahlen abhängig von der Zunahme des vom Elektromotor abgegebene Drehmomentes bzw. Lastmomentes abgelegt sind.

Das Steuergerät 3 überprüft, in welchem Drehzahlbereich sich der Elektromotor 6 befindet und welche Steigung der Drehzahl für den Drehzahlbereich im Datenspeicher 11 vorgesehen ist. Das Steuergerät 3 regelt entsprechend der im Datenspeicher vorgegebenen Steigung der Drehzahl die Drehzahl des Elektromotors. Beispielsweise kann die gemäß der Betätigung des Steuermittels zugeordnete Drehzahl entsprechend der abgelegten Steigung mit Zunahme des Lastmomentes reduziert werden.

In einer anderen Ausführung überprüft das Steuergerät 3, in welchem Drehmomentbereich sich der Elektromotor 6 befindet und ob für den Drehmomentbereich im Datenspeicher 11 eine Steigung der Drehzahl vorgesehen ist. Ist für den vorliegenden Drehmomentbereich eine Steigung der Drehzahl vorgesehen, so wird die vom Steuergerät 3 festgelegte elektrische Leistung gemäß einer im Datenspeicher 11 festgelegten Art und Weise festgelegt bzw. geregelt.

Zudem kann auch eine Kombination der Drehmomentbereiche und der Drehzahlbereiche mit Steigungen der Drehzahl bei Zunahme des Lastmomentes im Datenspeicher abgelegt sein, die vom Steuergerät berücksichtigt werden.

Weiterhin kann das Elektrowerkzeug mit einem weiteren separaten Bedienelement 12 ausgestattet sein, mit welchem die Parameter im Datenspeicher 11 durch den Bediener verändert werden können.

Zudem kann das Elektrowerkzeug eine Kommunikationsschnittstelle 13 aufweisen, mit welcher durch ein anderes elektrisches Gerät die Parameter im Datenspeicher verändert werden können. Die Kommunikationsschnittstelle 13 kann drahtlos oder drahtgebunden ausgebildet sein.

Fig. 2 zeigt in einer schematischen Darstellung eine Drehzahl pro Minute U/m des Elektromotors 6 in Abhängigkeit von einem Drehmoment M, das vom Elektromotor 6 abgegeben wird und dem Lastmoment entspricht. Es ist eine erste Kennlinie 21 eingetragen, welche bei einer maximalen Schalterstellung, sich ausgehend von der maximal einstellbare Leerlaufdrehzahl bis zum Stillstand, bei ansteigendem Drehmoment, d.h. Lastmoment einstellt. Die Drehzahl U fällt mit zunehmendem Drehmoment ab, wodurch üblicherweise die Kennlinie 21 eine konstante negative Steigung (delta U zu delta M) aufweist. Dieses Verhalten wird im Allgemeinen durch das Anlegen der maximalen zur Verfügung stehenden Systemspannung erreicht.

Das neu vorgeschlagene Verfahren reduziert bei einer nicht maximalen Leistung die Drehzahl bei einem steigenden Drehmoment in einem vorgegebenen Drehzahlbereich, der oberhalb einer ersten Schwelldrehzahl U1 liegt. Dabei durchläuft die Drehzahl/Drehmomentkennlinie die zweite Kennlinie 22. Die zweite Kennlinie 22 weist drei verschiedene Abschnitte 41,42,43 mit unterschiedlichen Werten für die Änderung der Drehzahl mit Zunahme des abgegebenen Drehmomentes auf. Die zweite Kennlinie 22 weist ausgehend von einer maximalen Drehzahl in einem ersten Abschnitt 41 eine erste Steigung, d.h. eine erste Abnahme der Drehzahl mit Zunahme des Drehmomentes bis zu dem Erreichen der ersten Schwelldrehzahl U1 auf.

Bei einer Drehzahl unter der ersten Schwelldrehzahl U1 geht die zweite Kennlinie 22 in den zweiten Abschnitt 42 über. Ab dem Erreichen der ersten Schwelldrehzahl U1 wird der Elektromotor 6 vom Steuergerät 3 und der Leistungselektronik 4 gemäß dem im Datenspeicher abgelegten Verhalten für die Drehzahl angetrieben. Dabei wird in diesem Fall die Leistung erhöht. Deshalb sinkt die Drehzahl des Elektromotors nicht weiter mit Zunahme des Drehmomentes, obwohl sich das abgegebene Drehmoment von einem ersten Drehmomentwert M1 bis zu einem zweiten Drehmomentwert M2 erhöht. Bei Erreichen des zweiten Drehmoments M2 reicht die Leistung des Elektromotors 6 nicht mehr aus, um die Drehzahl des Elektromotors bei weitere Zunahme des Drehmomentes beizubehalten. Die Drehzahl sinkt und die zweite Kennlinie 22 geht in den dritten Abschnitt 43 über. Auf dem dritten Abschnitt 43 sinkt die Drehzahl mit zunehmendem Drehmoment bis zu einem Wert 0 kontinuierlich ab. Die Drehzahl folgt in diesem Abschnitt beispielsweise einem Verhalten analog zur ersten Kennlinie 21. Der erste Abschnitt 41 und der dritte Abschnitt 43 der zweiten Kennlinie 22 können die gleiche negative Steigung aufweisen. Zwischen dem ersten und dem zweiten Drehmomentwert M1, M2 kann die Drehzahl auch sinken. Der Drehzahlbereich mit Drehzahlen über der Schwelldrehzahl U1 stellt einen festgelegten ersten Drehzahlbereich dar. Der Drehzahlbereich um die Schwelldrehzahl U1 oder darunter stellt einen zweiten Drehzahlbereich dar.

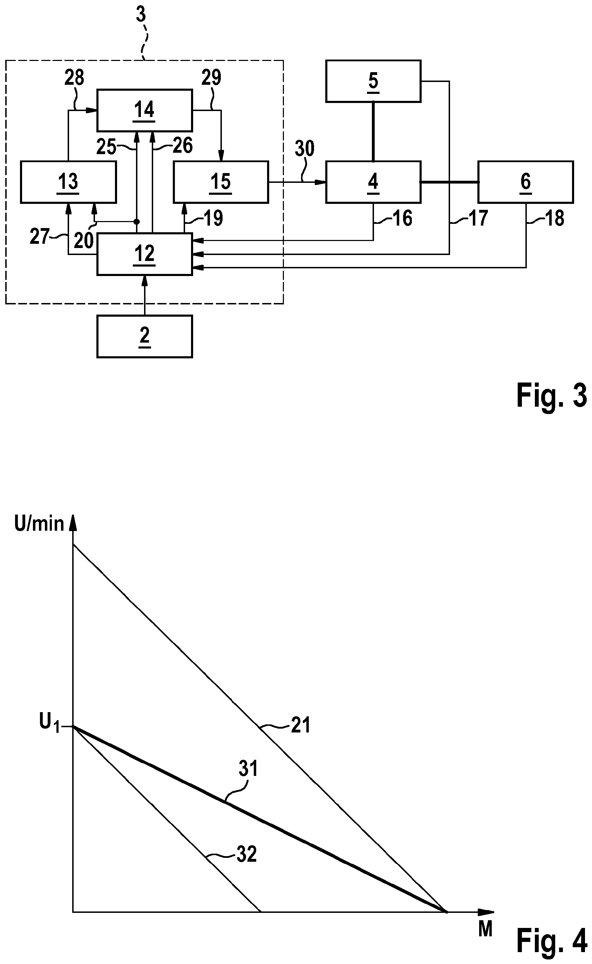

Fig. 3 zeigt eine Ausführungsform einer elektrischen Schaltung eines Steuergerätes 3 zur Ansteuerung des Elektromotors gemäß Fig. 2. Das Steuergerät 3 weist eine Signalaufbereitung 12, einen Drehzahlregler 13, einen Sollstrombegrenzer 14 und einen Stromregler 15 auf. Die Signalaufbereitung 12 erfasst über eine erste Sensorleitung 16 die von der Leistungselektronik 4 an den Elektromotor 6 abgegebene Stromstärke. Zudem erfasst die Signalaufbereitung 12 über eine zweite Sensorleitung 17 eine Spannung der Strom/Spannungsquelle 5, die beispielsweise als Batterie ausgebildet ist. Zudem erfasst die Signalaufbereitung 12 über eine dritte Sensorleitung 18 ein Positionssignal des Elektromotors. Die Signalaufbereitung 12 gibt den Wert der Spannung der Strom/Spannungsquelle 5 zusammen mit dem Wert des Ausgangsstromes der Leistungselektronik 4 über eine erste Steuerleitung 19 an den Stromregler 15 weiter. Zudem ermittelt das Steuergerät 3 aufgrund des Positionssignales und der zeitlichen Änderung des Positionssignales eine Drehzahl des Elektromotors. Die Signalaufbereitung 12 gibt die Drehzahl des Elektromotors über eine zweite und eine dritte Steuerleitung 20,25 an den Drehzahlregler 13 beziehungsweise an den Sollstrombegrenzer 14 weiter. Zudem gibt die Signalaufbereitung 12 den Wert der Spannung der Strom/Spannungsquelle über eine achte Steuerleitung 26 an den Sollstrombegrenzer 14 weiter.

Weiterhin wird abhängig von der Betätigung des Steuermittels 2 und insbesondere abhängig von der Drehzahl des Elektromotors und/oder der Spannung der Strom/Spannungsquelle 5 und/oder abhängig vom Strom der Leistungselektronik 4 eine Solldrehzahl von der Signalaufbereitung 12 ermittelt und die Solldrehzahl über die vierte Steuerleitung 27 an den Drehzahlregler 13 weitergegeben. Der Drehzahlregler 13 ermittelt abhängig von einem Vergleich aus der gemessenen Drehzahl, d.h. der Istdrehzahl und der Solldrehzahl einen Sollstrom. Der Sollstrom wird über eine fünfte Steuerleitung 28 an den Sollstrombegrenzer 14 weitergegeben. Der Sollstrombegrenzer 14 ermittelt abhängig von der gemessenen Drehzahl, d.h. der Istdrehzahl und abhängig von der gemessenen Spannung, d.h. von der Istspannung und/oder von dem gemessenen Strom, d.h. dem Iststrom einen Wert für den Sollstrom. Der Wert für den Sollstrom wird über eine sechste Steuerleitung 29 an den Stromregler 15 weitergegeben.

Der Sollstrombegrenzer 14 greift auf Daten des Datenspeichers 11 zu und kann somit die vorgegebenen Drehzahlbereiche und/oder Drehmomentbereiche berücksichtigen, in denen eine vorgegebene Steigung für den Abfall der Drehzahl mit Zunahme des Lastmomentes vorgegeben ist. Zudem kann der Sollstrombegrenzer 14 auf Kennlinien, Kennfelder, Formeln usw. zugreifen, die die Art der Regelung der Drehzahl des Elektromotors 6 in vorgegebenen Drehmomentbereichen und/oder in vorgegebenen Drehzahlbereichen festlegen.

Der Stromregler 15 ermittelt aus dem Sollstrom, der vom Sollstrombegrenzer 14 vorgegeben wird und dem Istwert des Stromes ein pulsweitenmoduliertes Signal, das über eine siebte Steuerleitung 30 der Leistungselektronik 4 zugeführt wird. Die Leistungselektronik 4 ist ausgebildet, um den Elektromotor 6 abhängig von der Ansteuerung durch den Stromregler 15 mit elektrischer Leistung aus der Strom/Spannungsquelle 5 zu versorgen. Die Regelzeit der Steuerung kann kleiner als 100ms, kleiner als 10ms oder kleiner als 2ms sein.

Das in Fig. 3 dargestellte Ersatzschaltbild zeigt eine Systemarchitektur eines Drehzahlreglers mit einer unterlagerten Stromregelung. Eine Sollwertvorgabe des Drehzahlreglers wird mithilfe der Steuerelektronik aus dem Schaltersignal, das heißt dem Steuermittel 2, geniert. Der Istwert der Drehzahl wird mithilfe des Rotorpositionssignals generiert und dem Drehzahlregler zugeführt. Das Ausgangssignal des Drehzahlreglers ist der Sollwert für den Stromregler. Dem Stromregler ist der Istwert des Stromes zugeführt. Der Stromregler berechnet als Ausgangsgröße den Wert der pulsweiten Modulation und dieser Wert wird anschließend zur Ansteuerung der Leistungselektronik verwendet.

Der Stromsollwert, der im Drehzahlregler erzeugt wird, wird nicht direkt dem Stromregler zugeführt. Stattdessen wird der Stromsollwert abhängig von der IstDrehzahl des Motors und vorzugsweise abhängig von der Spannung der Strom/Spannungsquelle 5 generiert.

Fig. 4 zeigt ein weiteres Diagramm für eine Drehzahl/Drehmomentkennlinie bei einer anderen Implementierung des vorgeschlagenen Verfahrens. Es ist wieder die erste Kennlinie 21 eingezeichnet, die eine übliche Ansteuerung eines Elektromotors eines Elektrowerkzeuges mit maximaler Leistungsanforderung, d.h. mit einem voll durchgedrückten Schalter darstellt. Abhängig von der gewählten Ausführungsform ist das Steuergerät ausgebildet, um die Drehzahl des Elektromotors in der Weise zu steuern, dass eine fünfte Kennlinie 31 ausgeführt wird. Die fünfte Kennlinie 31 weist eine geringere Steigung der Änderung der Drehzahl mit zunehmendem Drehmoment auf. Bei dieser Ausführungsform wird über den gesamten Drehzahlbereich eine reduzierte Drehzahl über den Elektromotor abgegeben. Somit kann dieses Ausführungsbeispiel in der Weise betrachtet werden, dass die reduzierte maximale Drehzahl auf der fünften Kennlinie 31 der Schwelldrehzahl U1 entspricht.

Die sechste Kennlinie 32 zeigt ein Verhalten der Drehzahl mit zunehmendem Drehmoment, wobei die sechste Kennlinie 32 eine größere Steigung als die fünfte Kennlinie 31 aufweist. Sowohl die fünfte als auch die sechste Kennlinie 31, 32 weisen eine gleich-große maximale Drehzahl U1 auf. Die maximale Drehzahl U1 ist geringer als eine maximale Drehzahl gemäß der ersten Kennlinie 31. Bei der Ansteuerung des Elektromotors gemäß der sechsten Kennlinie 32 wird der Elektromotor mit weniger Leistung als bei der Ansteuerung mit der fünften Kennlinie 31 versorgt.

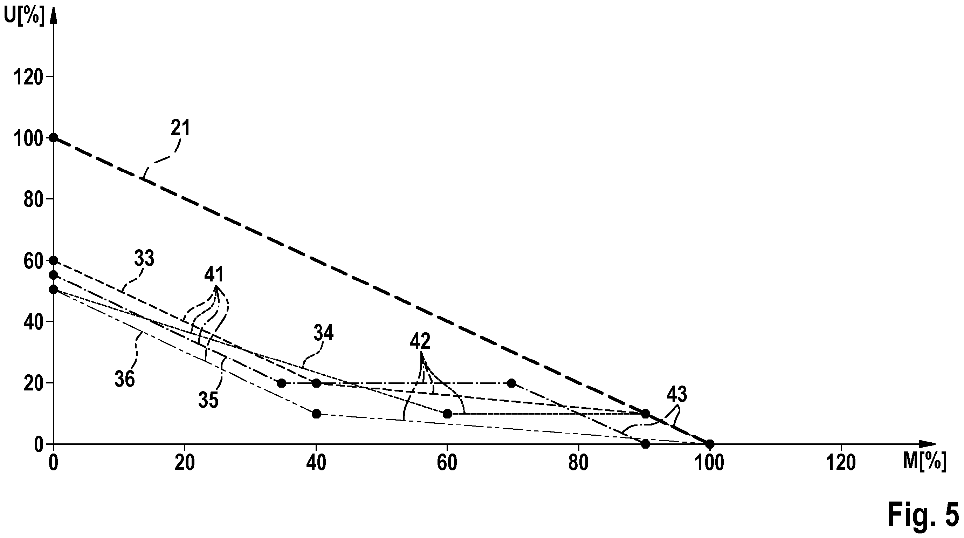

Fig. 5 zeigt weitere Kennlinien für die Drehzahlen des Elektromotors abhängig vom Lastmoment, die mithilfe der vorgeschlagenen Verfahren realisiert werden können. Es ist wieder die erste Kennlinie 21 für die Drehzahl für einen normalen Betrieb des Elektrowerkzeuges dargestellt, bei dem immer der Elektromotor 6 des Elektrowerkzeuges 1 mit der von der Bedienperson gewünschten Drehzahl, in dem dargestellten Fall der maximalen Drehzahl betrieben wird. Zudem ist eine siebte Kennlinie 33 für die Drehzahl dargestellt, die einen Abschnitt 41, einen zweiten Abschnitt 42 und einen dritten Abschnitt 43 aufweist. Die siebte Kennlinie 33 weist eine maximale Drehzahl von 60 % der maximalen Drehzahl der ersten Kennlinie 21 auf. In dem ersten Abschnitt 41, der sich von 0 bis 40 % des maximalen Drehmomentes M erstreckt, weist die siebte Kennlinie 33 eine größere negative Steigung als der folgende zweite Abschnitt 42 der siebten Kennlinie 33 auf. Der zweite Abschnitt 42 der siebten Kennlinie 33 erstreckt sich von 20 % der maximalen Drehzahl bis ungefähr 10 % der maximalen Drehzahl. Bei ungefähr 10 % der maximalen Drehzahl geht die siebte Kennlinie 33 im dritten Abschnitt 43 in die erste Kennlinie 21 über.

Im Gegensatz zur Ausführung der Drehzahl/Drehmomentkennlinie der Fig. 2 ist im zweiten Abschnitt 42 die Drehzahl nicht konstant, sondern sinkt weiter mit Zunahme des Drehmomentes, jedoch nicht so stark wie im ersten Abschnitt 41. Im zweiten Abschnitt 42 der siebten Kennlinie 33, d.h. im Drehzahlbereich zwischen 20% und 10% der maximal möglichen Drehzahl wird der Elektromotor 6 mit mehr elektrischer Leistung versorgt als im Drehzahlbereich über 20% der maximalen Drehzahl. Im dritten Abschnitt der siebten Kennlinie 33 wird der Elektromotor 6 mit der gleichen elektrischen Leistung wie im zweiten Abschnitt 42 versorgt, insbesondere mit der maximal möglichen Leistung.

Die achte Kennlinie 34 für die Drehzahl des Elektromotors weist auch drei Abschnitte 41,42,43 auf, die jeweils eine konstante negative Steigung mit Zunahme des Drehmomentes aufweisen. Bei der achten Kennlinie 34 geht der erste Abschnitt 41 bei einer Drehzahl von 15 % der maximalen Drehzahl in den zweiten Abschnitt über. Die Drehzahl wird im zweiten Abschnitt 42 konstant gehalten, wobei bei Erreichen eines maximalen Drehmomentes von 90 % in die erste Kennlinie 21 übergegangen wird. Dabei wird im ersten Drehzahlbereich oberhalb von 15% der maximalen Drehzahl der Elektromotor 6 mit weniger als der maximalen elektrischen Leistung versorgt. Im Drehzahlbereich unterhalb von 15% der maximalen Drehzahl wird der Elektromotor 6 mit maximaler elektrischer Leistung versorgt.

Die neunte Kennlinie 35 für die Drehzahl des Elektromotors ist auch in drei Abschnitte 41,42,43 unterteilt, wobei der erste Abschnitt bei 20 % der maximalen Drehzahl in den zweiten Abschnitt 42 übergeht. Im zweiten Abschnitt 42 wird die Drehzahl bei Zunahme des Drehmomentes konstant gehalten, bis 75 % des maximalen Drehmomentes erreicht sind. In Bereichen von 75 % des maximalen Drehmomentes wird in den dritten Abschnitt übergegangen, wobei maximal nur 90 % der maximal möglichen Drehzahl abgegeben werden. Im dritten Abschnitt ist die negative Steigung wieder konstant. Dabei wird im ersten Drehzahlbereich oberhalb von 20% der maximalen Drehzahl der Elektromotor 6 mit weniger als der maximalen elektrischen Leistung versorgt. Im Drehzahlbereich um 20% der maximalen Drehzahl wird der Elektromotor 6 zwischen 38% des maximalen Drehmomentes und 75 % des maximalen Drehmomentes mit höherer elektrischer Leistung, insbesondere mit maximaler Leistung versorgt. In dem Drehmomentbereich über 75% des maximalen Drehmomentes wird die elektrische Leistung des Elektromotors wieder reduziert, so dass nur 90% des maximalen Drehmomentes erreicht werden.

Eine zehnte Kennlinie 36 für die Drehzahl des Elektromotors ist nur in zwei Abschnitte unterteilt, in denen die Drehzahl von 50 % der maximalen Drehzahl bis auf 10 % der maximalen Drehzahl sinkt und bei Erreichen von 40 % des maximalen Drehmomentes in den zweiten Abschnitt übergeht. Im zweiten Abschnitt sinkt die Drehzahl weiter bis auf den Wert 0, wobei beim Wert 0 100 % des maximal möglichen Drehmomentes erreicht werden. Die Abnahme der Drehzahl mit Zunahme des abgegebenen Drehmomentes ist im zweiten Abschnitt der zehnten Kennlinie 36 kleiner als im ersten Abschnitt, da im Drehzahlbereich über 10% der maximalen Drehzahl der Elektromotor mit weniger als der maximal zur Verfügung stehenden Leistung angetrieben wird. Im Drehzahlbereich unter 10 % der maximalen Drehzahl wird die elektrische Leistung des Elektromotors erhöht bis auf die maximal mögliche elektrische Leistung. Anstelle der beschriebenen Kennlinien können auch weitere Kennlinien im Datenspeicher abgelegt sein bzw. berechnet werden, um die Drehzahl abhängig von dem abgegebenen Drehmoment festzulegen.

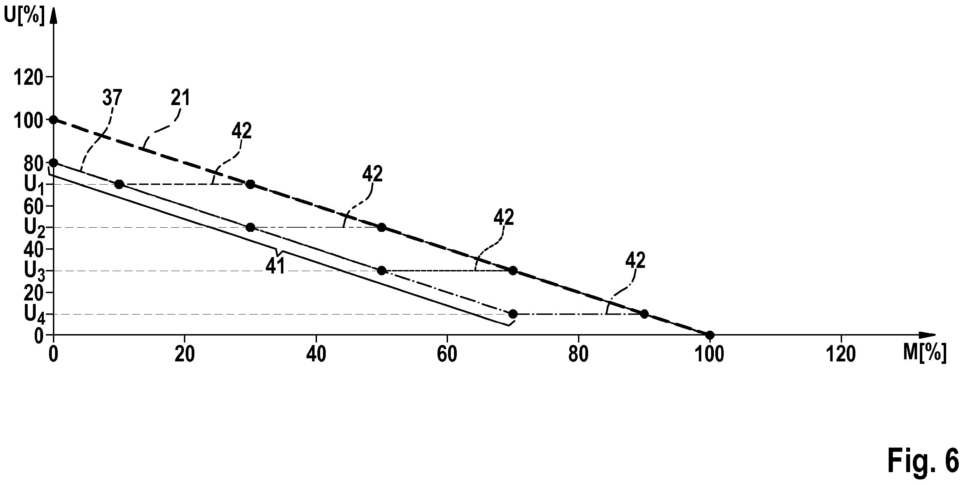

Fig. 6 zeigt in einer schematischen Darstellung wieder die erste Kennlinie 21 für die Drehzahl für einen normalen Betrieb des Elektrowerkzeuges, bei dem immer der Elektromotor 6 des Elektrowerkzeuges 1 mit der von der Bedienperson gewünschten Drehzahl, in dem dargestellten Fall der maximalen Drehzahl, betrieben wird. Zudem sind verschiedene Varianten einer elften Kennlinie 37 für Drehzahlen des Elektromotors dargestellt. Abhängig von der gewählten Ausführungsform kann die elfte Kennlinie 37 bei verschiedenen Schwelldrehzahlen U1, U2, U3, U4 von dem ersten Abschnitt 41 in einen zweiten Abschnitt 42 übergehen. In dem hier beispielhaft dargestellten Fall wird die Drehzahl im zweiten Abschnitt 42 bis zum Erreichen der ersten Kennlinie 21 konstant gehalten. Abhängig von einem Betriebsparameter des Elektrowerkzeuges kann die elfte Kennlinie 37 bei einer ersten Schwelldrehzahl U1 von 70 % der maximalen Drehzahl in einen zweiten Abschnitt 42 übergehen.

Zudem kann abhängig von der gewählten Ausführungsform beziehungsweise abhängig von einem Betriebsparameter des Elektrowerkzeuges die Kennlinie 37 bei einer zweiten Schwelldrehzahl U2 von 50 % der maximalen Drehzahl in den zweiten Abschnitt 42 übergehen. Zudem kann abhängig von der gewählten Ausführungsform die Kennlinie 37 bei einer dritten Schwelldrehzahl U3 von 30 % der maximalen Drehzahl in den zweiten Abschnitt 42 übergehen. Weiterhin kann abhängig von der gewählten Ausführungsform die Kennlinie 37 bei einer vierten Schwelldrehzahl U4 von 10 % der maximalen Drehzahl in den zweiten Abschnitt 42 übergehen. Im zweiten Abschnitt wird die Drehzahl konstant gehalten, bis die erste Kennlinie 21 und damit die maximal mögliche Leistung des Elektromotors 6 erreicht ist.

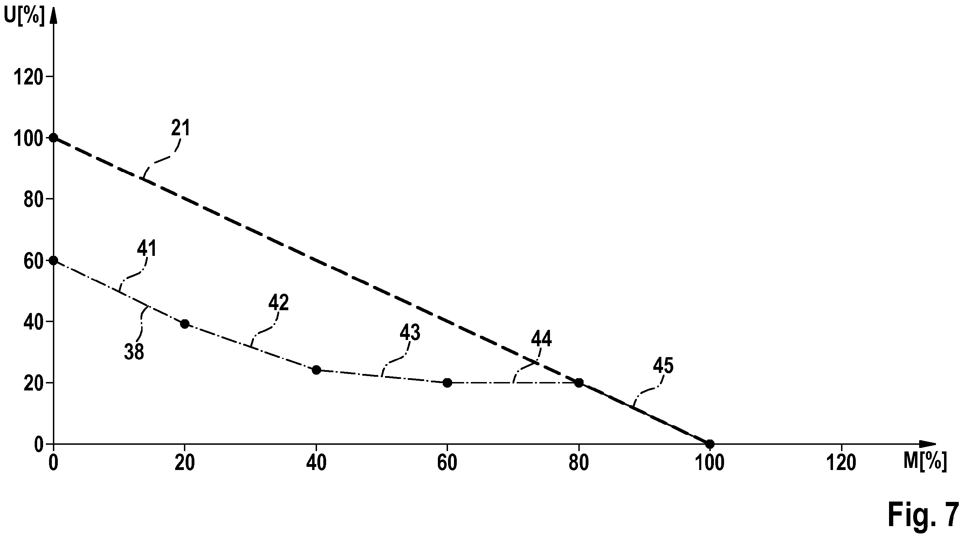

Fig. 7 zeigt die erste Kennlinie 21 und eine zwölfte Kennlinie 38 für die Drehzahl des Elektromotors. Die zwölfte Kennlinie 38 startet bei 60 % der maximalen Drehzahl und weist Abschnitte mit unterschiedlichen negativen Steigungen der Drehzahl mit zunehmendem Drehmoment auf. In der dargestellten Ausführungsform weist der erste Abschnitt 41 die größte negative Steigung auf und geht bei 40 % der maximalen Drehzahl und 20 % des maximalen Drehmomentes in den zweiten Abschnitt 42 über. Der zweite Abschnitt 42 weist eine geringere negative Steigung als der erste Abschnitt 41 auf. Der zweite Abschnitt 42 geht bei 25 % der maximalen Drehzahl in 40 % des maximalen Drehmomentes in den dritten Abschnitt 43 über. Der dritte Abschnitt 43 weist eine geringere negative Steigung als der zweite Abschnitt 42 auf. Der dritte Abschnitt 43 geht bei einer maximalen Drehzahl von 20 % und einem maximalen Drehmoment von 60 % in einen vierten Abschnitt 44 über. Der vierte Abschnitt 44 weist eine geringere negative Steigung als der dritte Abschnitt 43 auf. Der dritte Abschnitt 44 geht bei 20 % der maximalen Drehzahl unter 80 % des maximalen Drehmomentes in einen fünften Abschnitt 45 über. Der fünfte Abschnitt 45 weist die gleiche negative Steigung wie die erste Kennlinie 21 auf und endet bei 0 % der Drehzahl und 100 % des maximalen Drehmomentes.

Abhängig von der gewählten Ausführungsform weist die verwendete Kennlinie mehr oder weniger Abschnitte mit Schwellgrenzwerten für die Drehzahlbereiche auf, wobei die Drehzahlen in den Drehzahlbereichen unterschiedliche Steigungen mit Zunahme des Drehmomentes aufweisen. Zudem können die Steigungen der Abschnitte der Kennlinien der Drehzahlen unterschiedlich groß sein und unterschiedliche Werte aufweisen. Abhängig von der gewählten Ausführungsform kann die vom Steuergerät 3 verwendete Kennlinie zum Regeln der Drehzahl des Elektromotors mehr oder weniger Schwelldrehzahlen mit mehr oder weniger Abschnitten aufweisen. Die Abschnitte der Kennlinien können unterschiedliche Steigungen, gleiche Steigungen unterschiedliche Längen aufweisen.

Zudem können sowohl die gewählten Drehzahlen bzw. Drehzahlkennlinien als auch die Schwelldrehzahlen zwischen Drehzahlbereichen mit unterschiedlichen Steigungen von Drehzahlkennlinien von Parametern des Elektrowerkzeuges abhängen. Beispielsweise können die Drehzahlkennlinien, insbesondere die Steigungen der Drehzahlkennlinien und die Schwelldrehzahlen von der Spannung der Strom/Spannungsquelle 5, von der gewählten Übersetzung des Getriebes 8 und/oder von der gewünschten Drehzahlanforderung durch eine Bedienperson, das heißt beispielsweise von der Drücktiefe eines Tasters, der als Steuermittel 2 verwendet wird, abhängen. Beispielsweise können die Drehzahlkennlinien, insbesondere die Steigungen der Drehzahlkennlinien und die Schwelldrehzahlen durch das separate Bedienelement 12 und/oder durch externe Befehle über das Kommunikationsmodul 13 ausgewählt bzw. festgelegt werden.

Mithilfe des vorgestellten Verfahrens wird das Arbeiten mit Elektrowerkzeugen insbesondere bei geringen Drehzahlen optimiert. Insbesondere bei elektrischen Schraubern, insbesondere bei Akkuschraubern, kann dieses Verfahren von Vorteil sein. Jedoch kann das Verfahren auch bei anderen Elektrowerkzeugen wie zum Beispiel Bohrmaschinen, Winkelschleifern, Gartenscheren, Sägen usw. verwendet werden.

Beispielsweise ist es beim Einschrauben von Schrauben in ein Werkstück dadurch möglich, auch bei fast versenkten Schrauben, diese noch mit der minimalsten Drehzahleinstellung des Schraubers weiterzudrehen und bündig zu versenken. Schwankungen in den Materialeigenschaften, die zu unterschiedlichen Anzugsmomenten führen, können im Wesentlichen vermieden werden. Die Bedienperson besitzt aufgrund des vorgeschlagenen Verfahrens und der verwendeten langsamen Drehzahl eine relativ hohe Reaktionszeit, um den Einschraubvorgang beim Erreichen der gewünschten Einschraubtiefe zu beenden.

Weiterhin kann das vorgeschlagene Verfahren auch zum Anziehen des Bohrfutters beim Befestigen eines Bohrers verwendet werden. Zudem kann das vorgeschlagene Verfahren zum Lösen einer Schraube mit reduzierter Drehzahl und höherem Drehmoment verwendet werden. Dabei kann gleichzeitig ein schlagartiges Erreichen eines maximalen Drehmomentes vermieden werden. Das vorgeschlagene Verfahren kann insbesondere als Regelverfahren sowohl für DC- wie auch für EC-Elektromotoren eingesetzt werden.

Mithilfe des vorgeschlagenen Verfahrens kann bei einer Leistungsanforderung durch die Bedienperson, die kleiner als 100 % des maximalen Drehmomentes ist, trotzdem bei Unterschreiten der Schwelldrehzahl ein höheres Drehmoment, insbesondere 100 % des maximal zur Verfügung stehenden Drehmomentes angefordert werden. Dadurch wird ein Blockieren eines Bohrers oder einer Schraube beispielsweise bei einer bereits halb eingedrehten Schraube vermieden.

## Patentansprüche

1. Verfahren zum Regeln einer Drehzahl eines Elektromotors eines Elektrowerkzeuges, wobei abhängig von einer Betätigung eines Steuermittels durch eine Bedienperson die Drehzahl des Elektromotors festgelegt wird, wobei das Steuermittel durch eine Bedienperson in der Weise betätigt wird, dass eine Drehzahl angefordert wird, die kleiner als eine maximale Drehzahl ist, wobei die Drehzahl des Elektromotors mittels eines Steuergerätes in der Weise eingestellt wird, dass in einem ersten Drehzahlbereich bis zum Erreichen einer Schwelldrehzahl bei einer Zunahme eines vom Elektromotor abgegebenen Drehmomentes die Drehzahl mit einer ersten negativen Steigung abnimmt, **dadurch gekennzeichnet, dass** die Drehzahl in einem zweiten Drehzahlbereich nach dem Erreichen der Schwelldrehzahl in der Weise eingestellt wird, dass die Drehzahl bei einer Zunahme des abgegebenen Drehmomentes mit einer zweiten Steigung verläuft, wobei die zweite Steigung mathematisch gesehen größer als die erste Steigung ist.

2. Verfahren nach Anspruch 1, wobei in dem ersten Drehzahlbereich bei einer Abnahme des abgegebenen Drehmomentes die Drehzahl mit der ersten Steigung zunimmt, und wobei die Drehzahl in dem zweiten Drehzahlbereich bei einer Abnahme des abgegebenen Drehmomentes mit der zweiten Steigung verläuft.

3. Verfahren nach Anspruch 1 oder 2, wobei die Drehzahl im zweiten Drehzahlbereich annähernd konstant gehalten wird, so dass die zweite Steigung einen Wert Null aufweist.

4. Verfahren nach einem der Ansprüche 1 bis 3, wobei ein dritter Drehzahlbereich vorgesehen ist, wobei in dem dritten Drehzahlbereich die Drehzahl in der Weise eingestellt wird, dass mit Zunahme des abgegebenen Drehmomentes sich die Drehzahl mit einer dritten Steigung ändert, wobei die dritte Steigung unterschiedlich zur zweiten Steigung ist.

5. Verfahren nach einem der vorhergehenden Ansprüche, wobei wenigstens ein vierter Drehzahlbereich vorgesehen ist, wobei in dem vierten Drehzahlbereich die Drehzahl des Elektromotors in der Weise eingestellt wird, dass die Abnahme der Drehzahl mit Zunahme des abgegebenen Drehmomentes kleiner ist als in dem zweiten Drehzahlbereich.

6. Verfahren nach einem der vorhergehenden Ansprüche, wobei die Änderung der Drehzahl mit der Zunahme des Drehmomentes von einem Betriebsparameter des Elektrowerkzeuges abhängt.

7. Verfahren nach einem der vorhergehenden Ansprüche, wobei die Schwelldrehzahl von einem Betriebsparameter des Elektrowerkzeuges abhängt.

8. Verfahren nach einem der Ansprüche 6 bis 7, wobei der Betriebsparameter eine Übersetzung eines Getriebes des Elektrowerkzeuges darstellt.

9. Verfahren nach einem der Ansprüche 6 bis 8, wobei der Betriebsparameter eine Betätigung des Steuermittels des Elektrowerkzeuges darstellt

10. Verfahren nach einem der Ansprüche 6 bis 9, wobei der Betriebsparameter eine Spannung einer Stromversorgung des Elektromotors, insbesondere eine Spannung einer Batterie darstellt.

11. Verfahren nach einem der Ansprüche 6 bis 10, wobei der Betriebsparameter eine Temperatur des Elektrowerkzeuges, insbesondere eine Temperatur der Batterie, der Elektronik und/oder des Elektromotors darstellt.

12. Verfahren nach einem der vorhergehenden Ansprüche, wobei das Verhalten zwischen der Drehzahl und dem abgegebenen Drehmoment oder eine Schwelldrehzahl über eine Betätigung eines Bedienelementes am Elektrowerkzeug verändert werden kann.

13. Verfahren nach einem der vorhergehenden Ansprüche, wobei eine Schwelldrehzahl oder das Verhalten zwischen der Drehzahl und dem abgegebenen Drehmoment über eine Kommunikationsschnittstelle verändert werden kann.

14. Verfahren nach einem der vorhergehenden Ansprüche, wobei die Schwelldrehzahl in einem Bereich von 70% bis 10% der maximalen Drehzahl beträgt.

15. Steuergerät (3), das so konfiguriert ist, dass es das Verfahren gemäß einem der vorhergehenden Ansprüche durchführt.

16. Steuergerät (3) nach Anspruch 15, wobei ein Drehzahlregler (13), ein Sollstrombegrenzer (14) und ein Stromregler (15) vorgesehen sind.

17. Steuergerät (3) nach einem der Ansprüche 15 bis 16, wobei eine Signalaufbereitung (12) vorgesehen ist, wobei die Signalaufbereitung (12) eine von einer Leistungselektronik (4) an den Elektromotor (6) abgegebene Stromstärke erfasst, wobei die Signalaufbereitung (12) ein Signal für eine Festlegung einer Drehzahl des Elektromotors (6) erfasst, wobei die Signalaufbereitung (12) den Wert des Ausgangsstromes der Leistungselektronik (4) an den Stromregler (15) weiter gibt, wobei die Signalaufbereitung (12) einen Wert für die Drehzahl des Elektromotors (6) an den Drehzahlregler (13) und den Sollstrombegrenzer (14) weiter gibt, wobei abhängig von der Betätigung eines Steuermittels (2) eine Solldrehzahl von der Signalaufbereitung (12) ermittelt wird und die Solldrehzahl an den Drehzahlregler (13) weitergegeben wird, wobei der Drehzahlregler (13) abhängig von einem Vergleich aus der ermittelten Drehzahl und der Solldrehzahl einen Sollstrom ermittelt, wobei der Sollstrom über eine fünfte Steuerleitung (28) an den Sollstrombegrenzer (14) weitergegeben wird, wobei der Sollstrombegrenzer (14) abhängig von der ermittelten Drehzahl und abhängig von dem gemessenen Strom einen Wert für den Sollstrom ermittelt, und wobei der Wert für den Sollstrom an den Stromregler (15) weitergegeben wird.

18. Steuergerät nach Anspruch 17, wobei die Signalaufbereitung (12) eine Spannung der Strom/Spannungsquelle (5) erfasst, wobei die Signalaufbereitung (12) den Wert der Spannung der Strom/Spannungsquelle (5) an den Stromregler (15) weiter gibt, und wobei die Signalaufbereitung (12) den Wert der Spannung der Strom/Spannungsquelle an den Sollstrombegrenzer (14) weiter gibt, wobei der Sollstrombegrenzer (14) abhängig von der gemessenen Drehzahl und abhängig von der gemessenen Spannung und abhängig von dem gemessenen Strom einen Wert für den Sollstrom ermittelt.

19. Steuergerät nach Anspruch 17 oder 18, wobei der Sollstrombegrenzer (14) auf Daten eines Datenspeichers (11) zugreift und die vorgegebenen Drehzahlbereiche berücksichtigt, in denen eine vorgegebene Steigung für das Verhalten der Drehzahl mit Zunahme oder Abnahme des Drehmomentes vorgegeben ist.

20. Steuergerät nach einem der Ansprüche 15 bis 19, **dadurch gekennzeichnet, dass** das Steuergerät (3) mit einem Datenspeicher (11) verbunden ist, in dem Steuerprogramme und/oder Kennlinien und/oder Grenzwerte und/oder vorgegebene Drehzahlbereiche und/oder vorgegebene Drehmomentbereiche für Werte von Drehahlen bzw. für Steigungen von Drehzahlen abhängig von der Zunahme des vom Elektromotor (6) abgegebene Drehmomentes bzw. Lastmomentes abgelegt sind.

21. Elektrowerkzeug (1) mit einem Steuergerät (3) gemäß einem der Ansprüche 15 bis 20.

## Claims

1. Method for regulating a rotational speed of an electric motor of an electric tool, wherein the rotational speed of the electric motor is defined as a function of an actuation of a control means by an operator, wherein the control means is actuated by an operator in such a way that a rotational speed is requested which is lower than a maximum rotational speed, wherein the rotational speed of the electric motor is adjusted by means of a control device in such a way that, in a first rotational speed range until a threshold rotational speed is reached, if there is an increase in a torque output by the electric motor, the rotational speed decreases with a first negative gradient,
**characterized in that**
in a second rotational speed range, after the threshold rotational speed has been reached, the rotational speed is adjusted in such a way that, if there is an increase in the output torque, the rotational speed varies with a second gradient, wherein the second gradient, viewed mathematically, is greater than the first gradient.

2. Method according to Claim 1, wherein, in the first rotational speed range, if there is a reduction in the output torque, the rotational speed increases with the first gradient, and wherein, in the second rotational speed range, if there is a reduction in the output torque, the rotational speed varies with the second gradient.

3. Method according to Claim 1 or 2, wherein, in the second rotational speed range, the rotational speed is kept approximately constant, so that the second gradient has a value of zero.

4. Method according to one of Claims 1 to 3, wherein a third rotational speed range is provided, wherein, in the third rotational speed range, the rotational speed is adjusted in such a way that with an increase in the output torque, the rotational speed changes with a third gradient, wherein the third gradient is different from the second gradient.

5. Method according to one of the preceding claims, wherein at least a fourth rotational speed range is provided, wherein, in the fourth rotational speed range, the rotational speed of the electric motor is adjusted in such a way that the decrease in the rotational speed as the output torque increases is smaller than in the second rotational speed range.

6. Method according to one of the preceding claims, wherein the change in the rotational speed with the increase in the torque depends on an operating parameter of the electric tool.

7. Method according to one of the preceding claims, wherein the threshold rotational speed depends on an operating parameter of the electric tool.

8. Method according to either of Claims 6 and 7, wherein the operating parameter represents a transmission ratio of a gearbox of the electric tool.

9. Method according to one of Claims 6 to 8, wherein the operating parameter represents an actuation of the control means of the electric tool.

10. Method according to one of Claims 6 to 9, wherein the operating parameter represents a voltage of a power supply of the electric motor, in particular a voltage of a battery.

11. Method according to one of Claims 6 to 10, wherein the operating parameter represents a temperature of the electric tool, in particular a temperature of the battery, of the electronics and/or of the electric motor.

12. Method according to one of the preceding claims, wherein the relationship between the rotational speed and the output torque or a threshold rotational speed can be changed via an actuation of an operating element on the electric tool.

13. Method according to one of the preceding claims, wherein a threshold rotational speed or the relationship between the rotational speed and the output torque can be changed via a communication interface.

14. Method according to one of the preceding claims, wherein the threshold rotational speed is in a range from 70% to 10% of the maximum rotational speed.

15. Control device (3), which is configured such that it carries out the method according to one of the preceding claims.

16. Control device (3) according to Claim 15, wherein a rotational speed regulator (13), a target current limiter (14) and a current regulator (15) are provided.

17. Control device (3) according to either of Claims 15 and 16, wherein a signal processing unit (12) is provided, wherein the signal processing unit (12) ascertains a current intensity output to the electric motor (6) by power electronics (4), wherein the signal processing unit (12) detects a signal to define a rotational speed of the electric motor (6), wherein the signal processing unit (12) forwards the value of the output current of the power electronics (4) to the current regulator (15), wherein the signal processing unit (12) forwards a value for the rotational speed of the electric motor (6) to the rotational speed regulator (13) and the target current limiter (14), wherein a target rotational speed is determined by the signal processing unit (12) as a function of the actuation of a control means (2) and the target rotational speed is forwarded to the rotational speed regulator (13), wherein, depending on a comparison of the determined rotational speed and the target rotational speed, the rotational speed regulator (13) determines a target current, wherein the target current is forwarded to the target current limiter (14) via a fifth control line (28), wherein the target current limiter (14) determines a value for the target current as a function of the determined rotational speed and as a function of the measured current, and wherein the value for the target current is forwarded to the current regulator (15).

18. Control device according to Claim 17, wherein the signal processing unit (12) detects a voltage of the current/voltage source (5), wherein the signal processing unit (12) forwards the value of the voltage from the current/voltage source (5) to the current regulator (15), and wherein the signal processing unit (12) forwards the value of the voltage from the current/voltage source to the target current limiter (14), wherein the target current limiter (14) determines a value for the target current as a function of the measured rotational speed and as a function of the measured voltage and as a function of the measured current.

19. Control device according to Claim 17 or 18, wherein the target current limiter (14) accesses data from a data memory (11) and takes into account the predefined rotational speed ranges in which a predefined gradient for the relationship of the rotational speed with the increase or decrease in the torque is predefined.

20. Control device according to one of Claims 15 to 19, **characterized in that** the control device (3) is connected to a data memory (11) in which control programs and/or characteristic curves and/or limiting values and/or predefined rotational speed ranges and/or predefined torque ranges for values of rotational speeds or for gradients of rotational speeds are stored as a function of the increase in the torque or load torque output by the electric motor (6).

21. Electric tool (1) having a control device (3) according to one of Claims 15 to 20.

## Revendications

1. Procédé de régulation d'une vitesse de rotation d'un moteur électrique d'un outil électrique, la vitesse de rotation du moteur électrique étant déterminée en fonction de l'actionnement d'un moyen de commande par un opérateur, le moyen de commande étant actionné par un opérateur de manière à demander une vitesse de rotation qui est inférieure à une vitesse de rotation maximale, la vitesse de rotation du moteur électrique étant réglée au moyen d'une unité de commande de sorte que, dans une première plage de vitesse de rotation, la vitesse de rotation diminue avec une première pente négative jusqu'à ce qu'une vitesse seuil soit atteinte lorsqu'un couple délivré par le moteur électrique augmente, **caractérisé en ce que**
dans une deuxième plage de vitesse de rotation, après que la vitesse seuil a été atteinte, la vitesse de rotation est réglée de sorte que la vitesse de rotation se poursuit avec une deuxième pente lorsque le couple délivré augmente, la deuxième pente étant mathématiquement supérieure à la première pente.

2. Procédé selon la revendication 1, dans la première plage de vitesse de rotation, la vitesse de rotation augmentant avec la première pente lorsqu'un couple délivré diminue et, dans la deuxième plage de vitesse de rotation, la vitesse de rotation se poursuivant avec la deuxième pente lorsque le couple délivré diminue.

3. Procédé selon la revendication 1 ou 2,
la vitesse de rotation étant maintenue à peu près constante dans la deuxième plage de vitesse de rotation de sorte que la deuxième pente comporte une valeur nulle.

4. Procédé selon l'une des revendications 1 à 3, une troisième plage de vitesse de rotation étant prévue, dans la troisième plage de vitesse de rotation la vitesse de rotation étant réglée de sorte que la vitesse de rotation varie avec une troisième pente lorsque le couple délivré augmente, la troisième pente étant différente de la deuxième pente.

5. Procédé selon l'une des revendications précédentes, au moins une quatrième plage de vitesse de rotation étant prévue, dans la quatrième plage de vitesse de rotation la vitesse de rotation du moteur électrique étant réglée de sorte que la diminution de la vitesse de rotation à mesure que le couple délivré augmente soit inférieure à celle dans la deuxième plage de vitesse de rotation.

6. Procédé selon l'une des revendications précédentes, la variation de la vitesse de rotation à mesure que le couple augmente dépendant d'un paramètre de fonctionnement de l'outil électrique.

7. Procédé selon l'une des revendications précédentes, la vitesse de rotation seuil dépendant d'un paramètre de fonctionnement de l'outil électrique.

8. Procédé selon l'une des revendications 6 à 7, le paramètre de fonctionnement représentant un rapport de transmission de l'outil électrique.

9. Procédé selon l'une des revendications 6 à 8, le paramètre de fonctionnement représentant un actionnement du moyen de commande de l'outil électrique.

10. Procédé selon l'une des revendications 6 à 9, le paramètre de fonctionnement représentant une tension d'une alimentation en courant du moteur électrique, en particulier une tension d'une batterie.

11. Procédé selon l'une des revendications 6 à 10, le paramètre de fonctionnement représentant une température de l'outil électrique, en particulier une température de la batterie, de l'électronique et/ou du moteur électrique.

12. Procédé selon l'une des revendications précédentes, le comportement entre la vitesse de rotation et le couple délivré ou une vitesse de rotation seuil pouvant être modifié par actionnement d'un élément de service au niveau de l'outil électrique.

13. Procédé selon l'une des revendications précédentes, une vitesse de rotation seuil ou le comportement entre la vitesse de rotation et le couple délivré pouvant être modifié par le biais d'une interface de communication.

14. Procédé selon l'une des revendications précédentes, la vitesse de rotation seuil étant dans une plage de 70 % à 10 % de la vitesse de rotation maximale.

15. Unité de commande (3) conçue de manière à mettre en œuvre le procédé selon l'une des revendications précédentes.

16. Unité de commande (3) selon la revendication 15, un régulateur de vitesse de rotation (13), un limiteur de courant de consigne (14) et un régulateur de courant (15) étant prévus.

17. Unité de commande (3) selon l'une quelconque des revendications 15 à 16, un traitement de signal (12) étant prévu, le traitement de signal (12) détectant une intensité de courant délivrée par une électronique de puissance (4) au moteur électrique (6), le traitement de signal (12) détectant un signal destiné à déterminer une vitesse de rotation du moteur électrique (6), le traitement de signal (12) transmettant la valeur du courant de sortie de l'électronique de puissance (4) au régulateur de courant (15), le traitement de signal (12) transmettant une valeur de la vitesse de rotation du moteur électrique (6) au régulateur de vitesse de rotation (13) et au limiteur de courant de consigne (14), une vitesse de rotation de consigne étant déterminée en fonction de l'actionnement d'un moyen de commande (2) par le processeur de signal (12) et la vitesse de rotation de consigne étant transmise au régulateur de vitesse de rotation (13), le régulateur de vitesse de rotation (13) déterminant un courant de consigne en fonction d'une comparaison entre la vitesse de rotation déterminée et la vitesse de rotation de consigne, le courant de consigne étant transmis au limiteur de courant de consigne (14) par le biais d'une cinquième ligne de commande (28), le limiteur de courant de consigne (14) déterminant une valeur du courant de consigne en fonction de la vitesse de rotation déterminée et en fonction du courant mesuré, et la valeur du courant cible étant transmise au régulateur de courant (15).

18. Unité de commande selon la revendication 17, le traitement de signal (12) détectant une tension de la source de courant/tension (5), le traitement de signal (12) transmettant la valeur de la tension de la source de courant/tension (5) au régulateur de courant (15), et le traitement de signal (12) transmettant la valeur de la tension de la source de courant/tension au limiteur de courant de consigne (14), le limiteur de courant de consigne (14) déterminant une valeur du courant de consigne en fonction de la vitesse de rotation mesurée et en fonction de la tension mesurée et en fonction du courant mesuré.

19. Unité de commande selon la revendication 17 ou 18, le limiteur de courant de consigne (14) accédant à des données d'une mémoire de données (11) et prenant en compte les plages de vitesse de rotation spécifiées dans lesquelles une pente spécifiée pour le comportement de la vitesse de rotation est spécifiée avec une augmentation ou une diminution du couple.

20. Unité de commande selon l'une des revendications 15 à 19, **caractérisée en ce que** l'unité de commande (3) est reliée à une mémoire de données (11) dans laquelle des programmes de commande et/ou des courbes caractéristiques et/ou des valeurs limites et/ou des plages de vitesse de rotation spécifiées et/ou des plages de couple spécifiées sont mémorisées pour des valeurs de vitesses de rotation ou pour des pentes de vitesses de rotation en fonction de l'augmentation du couple ou du moment de charge délivré par le moteur électrique (6).

21. Outil électrique (1) comprenant une unité de commande (3) selon l'une des revendications 15 à 20.
